# EUROPEAN PATENT APPLICATION

(11) **EP 3 101 582 A1**
(43) Date of publication of application: **07.12.2016**
(21) Application number: 15472002.3
(22) Date of filing: 01.06.2015
(51) Int. Cl.: G06F 21/60, G06F 21/62, G06F 21/64, H04L 29/06

(54) **METHOD AND SYSTEM FOR COLLECTION AND VERIFICATION OF DATA**

(71) Applicant: Eurodesign BG Ltd, 1784 Sofia (BG)
(72) Inventor: Mihalev, Anton Olegov, 1784 Sofia (BG)
(74) Representative: Benatov, Samuil Gabriel

(57) **Abstract**

The method and system for collection and verification of data are applicable to public and private needs in organizations which require independent monitoring of repeating identical events.

The method comprises: introducing primary data into registering device in order to be created at least one primary record of data; extraction, accumulation and storage in secure independent memory of control data for each primary record used for additional verification of the primary records; periodically sending accumulated in the registering device data for the primary records, created within certain period of time, to central database; comparing said control data with corresponding types of data accumulated and stored in another memory of the registering device and/or in the central database.

The system comprises registering device with an independent secure memory for storing control data for each primary record of data. The registering device is connected through transmission medium to the central database in a central device for storage and processing of data.

## Description

### TECHNICAL FIELD OF THE INVENTION

The method and system for encryption and verification of the data are applicable to public and private use in organizations, which require independent monitoring of repeating identical events. The method and system according to the invention in particular can apply to organizations in the sales of goods and services wishing to collect financial data from multiple entry points. This includes, for example, state tax authorities taking into account the specifics of their activities.

### BACKGROUND OF THE INVENTION

Nowadays there are different organizations having the need to collect data from multiple entry points. Such organizations, for example are:
- Tax authorities which collect the fees due from various taxes;
- Franchisors which would like to collect accurate information about the sales made by their partner franchisees;
- Manufacturing companies which would like to have accurate information regarding the sales of their distributors;
- Companies with warehouses for stock control.

The known systems for collecting, processing and storage of such data include multiple registering devices in the entry points for registering primary data. Such registering devices, for example, are fiscal cash registers that are printing primary document, such as a receipt for each record of primary data (example for primary data is the data for the sale). In addition the registering devices can process data for several primary records in summarizes secondary record and to issue relevant secondary document, such as daily or monthly report, for example.

The registering devices are connected through network for data transport with central device for storage and processing of data (CDSPD), which is adapted for receiving, verification, processing and storage of data received from multiple registering devices in a central database (CDB). This could be, for example, a central database of tax authority office. The registering devices must be personalized and registered in the central database so that there is reliable identification of the entry points, which aims to verify the data sources. There is known system comprising of multitude of fiscal devices (cash registers) connected to a central server, which supports central database of the National Revenue Authority (NRA). In the known system the fiscal devices identify themselves in the system with the following credentials: registration number of the device, which is generated by NRA during the registration of fiscal device; individual serial number of the fiscal device; individual number of the fiscal memory; identification number of the SIM card if the fiscal device communicates with the central database through mobile (GSM/UMTS) network. The NRA's central server verifies in its database whether the sent credentials are identical to those that have been stored during the device initial registration.

As communication medium for data transmission between the registering devices and the central device for storage and processing of data commonly is used telecommunication services of mobile networks and operators, for example GPRS and 3G. Another example of a communication medium, which implements standardized protocols such as TCP/IP are fixed networks, Ethernet, Intranet, radio channel, etc.

There is a known method for verification of the data transmitted from registering device to central device for storage and processing of data, which involves the use of data encryption device. The data encryption device is personalized to the registering device. The data being transmitted contains the unique identification numbers of the two devices, through which central device for storage and processing of data uniquely identifies the sender of the data. This authentication method increases the security of the system so that it protects it against manipulations.

There is a method for data protection, which includes data encryption device personalized to the registering device. The data encryption device is adapted to encrypt data using the method of private-public key. The public key is stored in the central device for storage and processing of data and it is used to decrypt the data received from the registering device.

The problem of the existing systems is the possibility to manipulate the data in the registering device before sending them to central database; thereby the data sent to central database is not going to match the data of the real events.

Another problem is the possibility of manipulating the data stored in the central database itself in abusive manner.

### SUMMARY OF THE INVENTION

### Problems to be solved by the Invention

An object of the invention is to provide a method for collecting and verifying data, enabling reliable verification and authenticity of the data stored in the registering device and/or in a central database.

Another object of the invention is to provide a method for creating a unique electronic signature for each primary or secondary record, stored in a registering device and/or in a central database and for each primary or secondary document issued by the registering device accordingly.

Another object of the invention is to provide a system for data collecting and data verification, which will allow the implementation of the method according to the invention.

Another object of the invention is to provide a registering device for data collection and verification, which is suitable for the implementation of the method and system according to the invention.

### Terms and abbreviations

In the present description the terms and abbreviations have the following meanings:
Primary data - uniform data, which are entered into registering device for registration of the same type (repeating) events, such as, but not limited to, sales, purchasing, inventory replenishment, recording stock items and others.
Primary record - digital record of primary data for occurred event, which is stored in the memory of the registering device.
Registering device (RD) - an electronic device, in which primary data can be entered, processed and accumulated and stored in the form of primary records. The registering devices can be, for example, but not limited to, cash registers, personal computers, measuring devices and other.
Secondary record - digital record of summarized primary records, which are created within a certain period of time. There is possibility that no primary records are created within the particular period of time. In this case the data from the secondary records will show this fact.
Data encryption device (DED) - an electronic device that is adapted to encrypt data with known cryptographic method.
Secure memory - protected area of registering device's memory or of data encryption device's memory, or separate independent memory in the registering device or in data encryption device, in which secure memory the recorded data cannot be modified and/or copied.
Central database (CDB) - database created by the accumulation of data of primary records by at least one registering device, which CDB is stored in a remote electronic device that is independent from the registering device.
Transmission medium - physical medium for data transfer between electronic devices.
Sensitive data - predefined essential data from primary or secondary records that carry important information about occurred event or events, such as, but not limited to, date, time, place of the event, serial number of the record, amount of the sale, items' number, certain item quantity or number and other.
Unique electronic signature - comprises encrypted data in the form of digital series created through encryption algorithms and it is a unique digital sequence (bit sequence), which is mathematically calculated from the data of a document in digital form (digital record) by electronic, for example, private key. The data, encrypted with the private key, cannot be read (decrypted) without a public key that corresponds to the private key. Said digital series of unique digital signature depends on the content of the document, the algorithm used for the signature and the private key used for signing; i.e the unique electronic signature is individual for each document (digital record).
Control data - predefined data set to the registering device or to the data encryption device, which data is being extracted by the registering device or by the data encryption device from the primary data records and accumulated in the secure memory. The control data are such as, but not limited to: number of records, sequential number of the record, identification codes (such as TIN, VAT number), tax groups, amount/turnover and/or total turnover, date and time of issuance, total quantities or items' numbers, individual numbers of the data encryption device and other.

### Solving the assigned problems

The problems assigned to the invention are solved by creating a method for collection and verification of data comprising of the following steps:
- entering primary data into a registering device in order to create at least one primary record, which is stored in a memory of the registering device,
- periodically sending of accumulated data in the registering device's memory for primary records, created during a certain period of time, to a central database in a central device for storage and processing of data. The data is being sent over a communication channel through transmission medium by communication device of the registering device to the central device for storage and processing of data,
- storing the transmitted data into said central device for storage and processing of data,
according to the invention said registering device extracts, accumulates and stores, in an independent secure memory, control data for each primary record. The control data are used to further inspection of the primary records. The inspection itself is performed by comparing said control data with corresponding types of data accumulated and stored in another memory of the registering device and/or in the central database.

In a preferred embodiment the method according to the invention comprises the following steps after entering of the primary data into the registering device:
- sending the entered primary data for each primary record to a data encryption device, which is personalized to the registering device,
- encrypting and personalizing of predefined sensitive data from the primary data by the data encryption device in order to create a unique electronic signature for each primary record. The personalization of the data encryption device includes generation of key pair comprising a first private key that is stored in the data encryption device and is used for the data encryption, and a second public key that which is stored in the central database and it is used for decryption and verification of the encrypted data. The generation of the pair keys can be done in the data encryption device as well as in external device,

- returning the encrypted data in the form of a unique digital signature to the registering device and storing each primary record and its encrypted data in the memory of the registering device,
- periodically sending, by the data encryption device, of accumulated encrypted data for the primary records and/or other data from the primary records, created during a certain period of time in the registering device's memory, to the central device for storage and processing of data, wherein the sending of data is carried out over a communication channel in transmission medium through the communication device of the registering device using unified communication protocol,
- decrypting the encrypted data in the central device for storage and processing of data with the corresponding public key and storing the decrypted data in the central database together with other data from the primary records in encrypted and decrypted form. The extraction and accumulation of the control data for each primary record is performed by the data encryption device, which stores the control data in its independent secure memory.

Preferably said registering device automatically or upon manual command creates a secondary record, which comprises a summary of the primary records created during a certain period of time and sends the data for each secondary record to data encryption device. The data encryption device encrypts and personalizes predefined sensitive data from the secondary record in order to create the unique electronic signature for each secondary record, wherein the encrypted data for each secondary record are returned back to the registering device in order to store each secondary record and its unique electronic signature in registering device's memory. The unique electronic signatures for each secondary record and/or other data from the secondary records and/or primary records are sent periodically to the central database.

Preferably the process of sending the data from the registering device to the central database is controlled by the data encryption device, wherein the data encryption device and the central device for storage and processing of data communicate between each other using unified communication protocol.

Preferably the data encryption device sends the control data in an encrypted form to the central database at each transmission of data from the memory of the registering device to the central database.

Preferably the communication channel between the data encryption device and the central database for storage and processing of data is protected through encryption.

Preferably the encrypted data for each primary and/or secondary record in the form of a unique electronic signature, and the corresponding primary and/or secondary record are visualized simultaneously by a device for visualizing, which is connected to the registering device.

Preferably each primary and/or secondary record and its corresponding unique electronic signature in the form of a barcode or a character string are printed together on the primary and/or secondary document by a printing device connected to the registering device.

Preferably the time at which the data of the primary and/or secondary records accumulated in the memory of the registering device is being sent to the central database is determined by reaching predefined value(s) of one or more numerical parameters.

Preferably upon manual command received from the registering device or a command from the central database the data encryption device extracts predefined data from the registering device memory for one or more primary and/or secondary records and sends them in encrypted or unencrypted form to the central database together with the accumulated control data from its secure memory.

A registering device for entering and processing of data is developed as well.

According to the first embodiment, the registering device for entering and processing of data comprises one or more devices for entering data, data processing device and non-volatile memory. The registering device is adapted to process and store in its memory the entered primary data in a form of primary records, wherein the registering device is adapted to extract, accumulate and store, in an independent secure memory, control data for the entered and stored by the registering device primary data.

According to the second embodiment, the registering device for entering and processing of data additionally comprises a data encryption device, which is personalized to the registering device. The data encryption device has its own unique number, which corresponds to a unique number of the registering device, wherein the data encryption device is adapted to encrypt data through cryptographic methods with a pair of keys - a first private key, which is stored in the data encryption device and is used for data encryption, and a second public key, which is stored in a remote device for storage and processing of data, and is used for decryption and verification of the encrypted data. Said independent secure memory is located in the data encryption device, which is adapted to extract, accumulate and store said control data in said independent secure memory.

Preferably the data encryption device is configured to generate a unique electronic signature for each primary record by encrypting predefined sensitive data for each primary record.

In one embodiment of the registering device the data encryption device is built-in in the registering device.

In an alternative embodiment of the registering device the data encryption device is implemented as an external device for the registering device able to connect to the registering device through serial and/or parallel interface.

Preferably the data encryption device additionally comprises a processor and/or module with computing, arithmetic, logical, and cryptographic capabilities.

Preferably the data encryption device is adapted to generate encrypted data as a unique electronic signature in the form of a character string and a digital image by an array of points.

Preferably the data encryption device has a predetermined validity for certain period of time, after which the data encryption device cease its function for generation of electronic signatures.

In alternative embodiments, the registering device additionally comprises or is connected to one or more of the following devices: data visualization device, communication device for transmitting data in transmission media to a remote device for storage and processing of data, printing device.

A system for collection and verification of data is also provided.

According to the first embodiment the system for collection and verification of data comprises:
- at least one personalized registering device for entering of primary data, which comprises one or more devices for entering data, device for data processing, device for data storing, and communication device for data transmission through transmission media to a central database,
   and
- central device for storage and processing of data adapted to support a central database and the central device for storage and processing of data is connected through transmission medium with at least one of said registering devices and is adapted for receiving, verification, processing and storage of data from multiple registering devices in the central database,
**wherein** at least one of said registering devices is adapted to extract, accumulate and store in its independent secure memory of control data for the entered and stored in the registering device data, for additional verification of the corresponding types of data accumulated and stored in another memory of the registering device and/or in a central device for storage and processing of data.

Preferably the registering device is a device according to the first embodiment of the registering device according to the invention.

According to the second embodiment of the system for the collection and verification of data:
- said at least one registering device comprises a data encryption device, which is personalized to the registering device and have a unique number that corresponds to the unique number of the registering device, and the data encryption device is adapted to encrypt data by cryptographic methods with a pair of keys - a first private key is stored in the data encryption device and is used for data encryption, and a second public key, which is stored in a central device for storage and processing of data and is used for decryption and verification of the encrypted data,
- said central device for storage and processing of data is adapted to store public keys of many personalized registering devices and capable of decrypting of the encrypted data with its corresponding public key,
wherein said independent secure memory is located in the data encryption device, which is adapted to extract, accumulate and store in said independent secure memory of said control data for entered and stored in the registering device data for further verification of corresponding types of data accumulated and stored in the registering device and/or in the central device for storage and processing of data.

Preferably the registering device is a device according to the second embodiment of the registering device according to the invention.

The accumulation of control data from the primary records in a secure memory of the data encryption device allows comparison of these data with similar data that are accumulated and stored as in the registering device and in central database. This comparison aims to verify the compliance and the reliability of the data stored in the registering device or in the central database. The discrepancy in the control data indicates that there is a difference between initially entered primary data and primary records stored in the memory of the registering device or in central database. This discrepancy could be caused by an error in the system or malicious manipulation of data. The control data is stored in a secure memory of the data encryption device, which makes it extremely difficult to be manipulated. The method allows the detection of differences between primary and secondary documents.

The creation of an encrypted data as an individual unique electronic signature for each primary and secondary record prevents the encrypted data from manipulation. At the same time the printing of the unique electronic signature together with each primary or secondary document allows the verification of these documents in order to limit the issuing of fake documents by the registering device and also to allow the detection of counterfeit documents after their issuance.

The proposed system can easily be expanded. It is also possible to easily modify an existing system to comply with the system according to the invention.

### BRIEF DESCRIPTION OF THE DRAWINGS

The method, the device and the system according to the present invention will be disclosed in details in the following description of preferred embodiments, given as non-restrictive examples, with reference to the attached drawings wherein:
FIG. 1 shows a schematic of the registering device according to one of the embodiment;
FIG. 2 shows a schematic of the registering device according to another embodiment with built-in data encryption device;
FIG. 3 shows a schematic of the registering device according to another embodiment with data encryption device, which is external device connected to the registering device;
FIG. 4 shows a schematic of the system according to simplified embodiment of the invention with one registering device;
FIG. 5 shows a schematic of the system according to the invention with multiple registering devices
FIG. 6 shows an algorithm for signing a primary document

### DETAILED DESCRIPTION OF PREFERRED EMBODIMENTS

The registering device 1 (RD) according to the invention is an electronic device that has one or more device for data entering 2, data processing device 3 and memory for storage of data 4. The RD is adapted to process and store entered in it primary data in the form of primary records in its memory 4. Also, RD can be adapted to create secondary records of summarized data from primary records, which are created within a certain period of time. The RD may have data visualization device 7, communication device for data transmission through medium 5 to other devices, printing device 8 and other appropriate devices, which are built-in or connected to the RD by known manner.

The registering device can be, for example, a cash register, a personal computer or other microprocessor-based device incorporating a calculating module - a tablet, a Smartphone, etc.

RD is preferably adapted to generate and store in its memory 4 and secondary records, which include summarized data from primary records created within a certain period of time. Secondary records are for example reports from the RD's memory 4.

The device for data entering 2, for example, may be a keyboard of the registering device. In another embodiment, the data entering may be performed by using the keyboard of a personal computer or by using of mobile device that has touch sensitive screen. Entering data may also be made through a command according to a unified protocol, which is sent via interface by the same devices - a personal computer/mobile device. The command is formed by specialized software. RD may have several data entering devices.

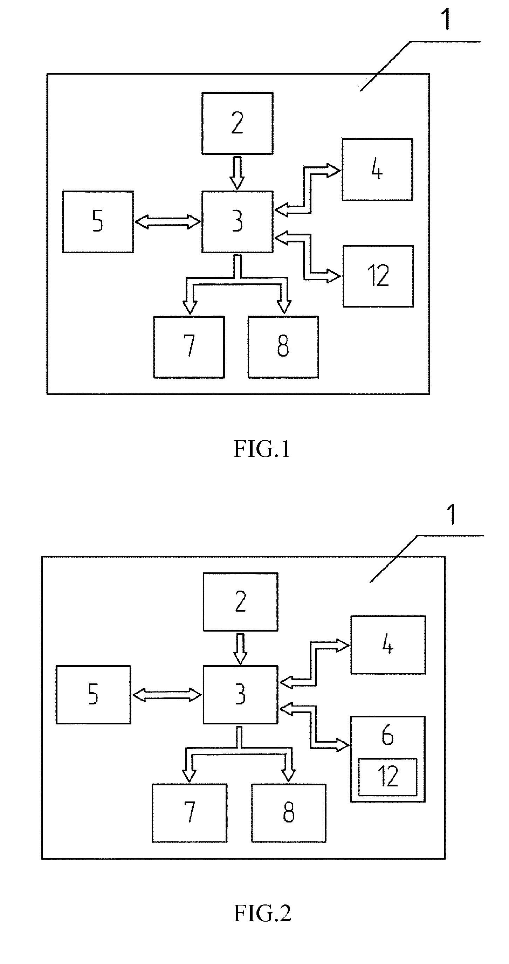

According to the invention the RD has an independent secure memory 12, which could be a protected area of its memory 4 or a separate memory (as shown in Figure 1). In any case the memory must be protected so that the data stored in it cannot be manipulated. RD is adapted to extract, accumulate and store in its secure memory 12 control data for entered and stored in the registering device data from primary and secondary records. The control data is data that can be accumulated, such as the total turnover of each primary document.

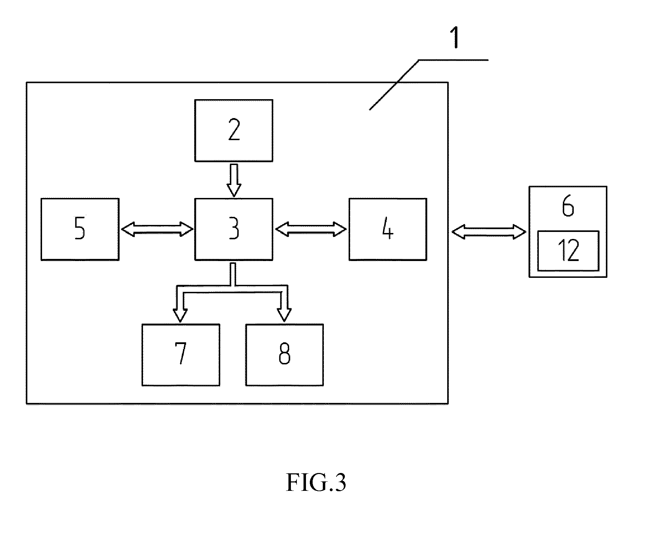

In a preferred embodiment of the invention the extraction, accumulation and storage of control data is done by special Data encryption device (DED) 6, connected to RD. DED is a universal device, which has a unified interface for connection to RD and uses unified communication protocol in order to communicate with the RD and the remote data storage device. The DED may be either built-in in RD (Figure 2) or an external device which is connected by known manner to the RD (Figure 3), for example but not limited to: via a USB and/or UART, and a serial/or parallel interface and communication protocol. DED includes independent secure memory 12, and it may have for example own processor and/or memory module and computing, arithmetic, logical, and cryptographic capabilities. For example the DED may have crypto card in which is located the secured memory 12, separate crypto processor or module that executes only cryptographic functions. The function of the DED is to sign primary records and/or secondary records, and it is adapted to generate individual unique electronic signature for each primary or secondary record. Each unique electronic signature is personalized with respect to the specific DED, i.e. it contains information about the encryption device, which generated the unique electronic signature.

DED is personalized to RD. The personalization is a process of forming a pair of RD-DED through their unique identification numbers. Once the RD is personalized to a particular DED, it cannot perform its functions for registering data if connected to another DED, and once DED is personalized to a particular RD the DED cannot perform its functions for generating a unique digital signature if it is connected to another RD. If it is necessary to replace the DED, for example due to malfunction, deregistration of the RD is performed through a process of uncoupling the pair RD-DED and creating a new one. Moreover this DED is adapted to encrypt data using the method with key pair - a first key is a private key that is stored in the DED and is used for data encryption and a second key is a public key, which is stored in a remote data storage device and is used for decryption and verification of the encrypted data. In this system the generating of the pair keys is done by the DED during the registration of the RD in the CDSPD. In an alternative embodiment, the pair keys are generated by an external device, then the private and the public key are stored in the DED and CDSPD. It is also possible the pair keys to be generated by the CDSPD during the registration of the RD and then the CDSPD sends the private key to DED of the RD.

Generating unique electronic signatures is done by extracting and encrypting specified sensitive data for each primary or secondary record by the DED. The type of the sensitive data depends on the type of primary data, which are entered in the RD, and accordingly, on the type of secondary records and reflect the specific needs of users or are consistent, for example, with tax laws or company rules. Once it is determined which of the primary data, respectively, secondary data to be the sensitive data, they are set in the DED before starting operation with the RD. Sensitive data may change depending on the change of legislation for example or contractual relationships and the new sensitive data is set in the DED. The encryption of data is done with the DED's private key.

In a preferred embodiment, for each primary record the RD sends all data to the DED, which generates and returns to the RD unique electronic signature for each of the primary records in a format suitable for storing it in the RD's memory - as a string and as a digital image format suitable for visualization by Data visualizing device (DVD) - such as an array of points. Preferably the digital image of the unique electronic signature is machine-readable barcode, preferably 2D-barcode that can be printed on the respective document. Simultaneously the DED extracts and accumulates said control data.

DED is preferably adapted to extract the predetermined control data when creating a signature for each primary document. DED then accumulates the extracted control data to the already stored control data until the present moment and stores them in the secured memory.

Moreover the DED can be adapted to manage and control the process of sending data from the memory of the RD to the central database by using a set of commands for extracting, forming and sending packets of data, which is known in the art. DED can be adapted to encrypt the process during personalization of the DED to RD.

DED is preferable to have a period of validity, which determines the time for executing the requests for signature. Moreover DED is adapted to protect the communication with the central database from malicious attacks (interventions) - through encryption of the communication channel by known to prior art cryptographic algorithms.

Furthermore, RD can have a data visualizing device 7, which visualizes the primary records and the unique electronic signatures. The DVD may be for example a display (LCD, TFT, etc.). It can be built-in or external part of the RD.

RD may have printing device 8, which serves to print the primary records and secondary records in the form of primary and secondary documents, together with their unique electronic signatures. The printing device may be any known in the art printing device, and can be built-in in the RD or external device connected to RD. Primary documents, for example, can be receipts with printed an individual unique electronic signature in the form, for example, of 2D-barcode on each of them.

RD has a communication device (CD) 5 for data transmission in medium 9, which provides connection to other remote device using a protocol. The same connection is used for data transfer to and from the RD. The communication device 5 can be, for example, GSM/GPRS modem, Ethernet controller, etc.

The transmission medium (TM) 9 provides the possibility for the communication device to perform its functions for transmission through it. The transmission medium can be wired and wireless. For example, this can be a GSM network of a mobile operator, Ethernet, local area network (Intranet) and others. The communication in a network is implemented with standardized protocol - TCP/IP. The transport medium can be - fixed network, Intranet, Internet, mobile network, such as GPRS, 3G and others. This gives much greater flexibility in implementation.

Examples of RD according to the invention:
Example variant 1 - fiscal cash register:
   The fiscal cash register for example includes a processor; program and/or non-volatile memory; random access memory; communication ports for connection to peripherals; keyboard with buttons for entering data (for sales of goods and/or services); display - it can be built-in or external for the fiscal cash register; printing mechanism for printing the receipts - it can be built-in or external to the fiscal cash register; built-in or external GSM/GPRS modem to connect to a mobile network operator providing mobile services for data transfer; built-in or external Ethernet communication module or logic, providing connectivity and the ability to transmit data over a wired transmission medium; Wi-Fi module or logic, providing connectivity and the ability to transmit data over a wireless transmission medium; built-in or external data encryption device such as crypto card with the logic needed for ensuring its operation.
Example variant 2 - fiscal printer:
   In its structure is included everything listed from Option 1 and the device for entering data is replaced by computer (mobile electronic device with a touch sensitive screen), which sends commands according to unified communication protocol with the data for sold goods and/or services; keyboard with a few buttons to ensure specific functions.

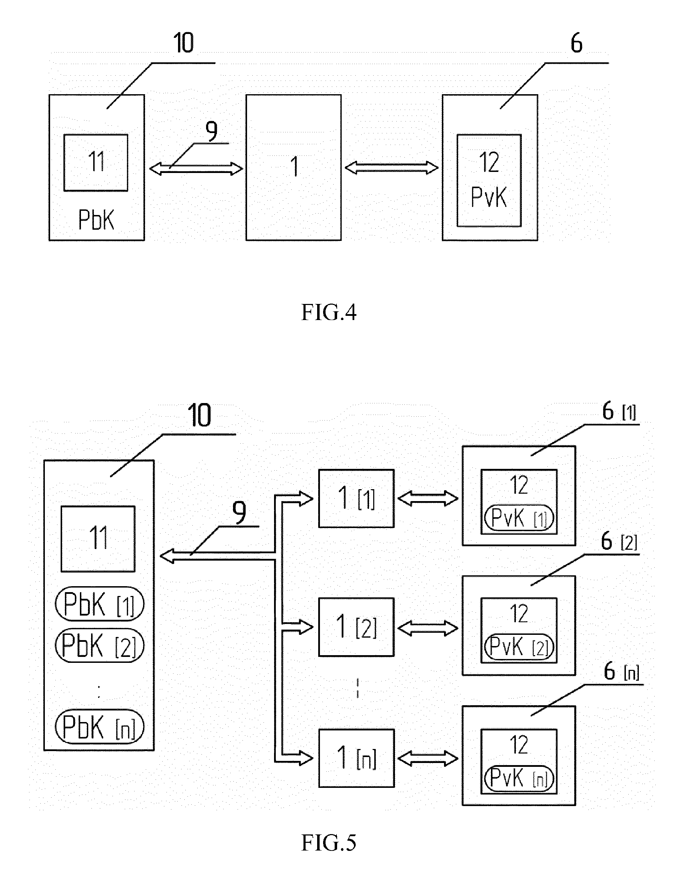

The system for collecting and processing of data, according to the invention comprises of one or more personalized RD 1 according to the invention and described above, connected through transmission medium 9 to a central device for storage and processing of data (CDSPD) 10 (Figure 4).

CDSPD is adapted to receive, verify, process and store data from multiple personalized registering devices in a central database (Figure 5). Each RD is registered in CDSPD.

In the preferred embodiment shown in Figure 5, the public key (PbK) of each of the many personalized registering devices is stored in the CDSPD. The CDSPD is adapted to decrypt the encrypted data created with the corresponding private key (PvC) that is received in the CDSPD from the respectively personalized registering device with its public key.

CDSPD can include in its structure one or more servers, which are executing one or more functions, such as registration server and communication server. The Registration server, for example, provides service for the registration requests of each registering device while the communication server serves the communication for data transfer of each registering device and its corresponding data encryption device. Every time when there is data transmission, the source of the data is uniquely identified by means of verification by known methods such as those described in the Background of this decryption. The communication is done according to unified communications protocol, and is protected through encryption methods. After verification of the data source, it is uniquely determined and CDSPD receives and stores the records sent by each RD, extracted and previously encrypted by the DED with its private key (PvK). The public key is used for decrypting of the encrypted with the corresponding private key data in order to be processed - analyzes and/or reports on specific criteria.

The method for collecting and verifying the data according to the invention comprises of the following steps:
- entering of primary data into registering device in order to create at least one primary record, which is stored in the memory of the registering device,
- extraction and accumulation and storage in secure memory of the RD of the control data for each primary record for further inspection of the primary records,
- periodically sending the accumulated in the memory of the RD data of primary records and/or other data of primary records created within a certain period of time to a central database in a central device for storage and processing of data (CDSPD), wherein sending of data to CDSPD is done through a communication channel in transmission medium with communication device of the RD,
- storing the data of the primary records in CDB.

In a preferred embodiment the method for collection and verification of data according to the invention comprises the following steps:
- entering of primary data in to registering device in order to create at least one primary record, which is stored in the memory of the registering device,
- sending the primary data for each primary record to data encryption device (DED), which is personalized to the registering device,
- encryption and personalization by the DED of predefined sensitive data from the primary data in order to create a unique digital signature for each primary record. The personalization of the data encryption device includes generation of pair keys - first private key stored in the DED and it is used for data encryption, and a second public key, which is stored in a central database and it is used for decrypting and verification of the encrypted data,
- extraction and accumulation in the DED and storing in its secure memory of the control data for each primary record for further control of the primary records,
- returning the encrypted data in the form of a unique digital signature to the registering device and storing each primary record and the encrypted data for each primary record in memory of the registering device,
- periodically sending the accumulated in the memory of the registering device encrypted data for primary records and/or other data from primary records created in a certain period of time to the central database (CDB) in a central device for storage and processing of data (CDSPD). The sending of data to CDSPD is done from the DED through a communication channel in transmission medium with communication device of the RD. The DED and the CDB are communicating between each other according to unified communication protocol,
- decrypting the encrypted data in CDSPD with the corresponding public key and storing in the CDB together with other data from the primary records in encrypted and decrypted form.

The control of the primary data is done by comparing said control data stored in the secured memory of RD or DED with corresponding types of data accumulated and stored in RDs and/or in the central database. If the result from the comparison shows differences this might mean that the data from the primary records (and/or secondary) stored in the RD and/or in CDB are manipulated. The comparison can be performed periodically, which will allow to determine the moment or the period in which the data has been manipulated.

In a preferred embodiment of the invention the DED controls the process of sending data from the registering device to CDSPD. It is used a set of commands through which DED determines when the RD have to create a communication channel for transmission by CD and what to be the contents of the information being sent.

Preferably the DED sends the control data in an encrypted form to CDSPD every time when data is being sent from the memory of the registering device to the central database. Of course, sending the control data to CDSPD may not be associated with sending other data and can be done in different time than the time for sending other data from RD to CDSPD. For example, DED can be set to send the accumulated control data to CDSPD at a specific time of day, whether transmitted other data from the RD.

Preferably the communication channel between the DED and CDSPD is protected through encryption. Known cryptographic method is used, which is predetermined and is used by the DED and CDSPD. Examples of such cryptographic methods are - RSA, 3DES, which are known in the prior art.

According to another preferred embodiment the RD automatically or upon receiving manual command creates and secondary record, which includes summarized data from the primary record created within a certain period of time and sends the data of each secondary record to the DED, which encrypts and personalizes the predefined sensitive data from the secondary record in order to create a unique electronic signature for each secondary record. The encrypted data in the form of a unique digital signature for each secondary record is returned to the registering device and it is being stored each secondary record and its corresponding electronic signature in memory of the registering device. The encrypted data for each secondary record and other data from secondary records are sent periodically to the central database, together with the accumulated control data from the DED's memory. Sending data for the secondary records to CDB can be done simultaneously with the sending of the data for the primary records as described below.

Before beginning of the process for entering data into the registering device, the RD must be personalized to the data encryption device. The personalization includes generating a pair of keys - Public and Private key. The private key is stored in the DED, for example in crypto card of the DED. The private key is unknown to no one and is used to encrypt data that have been sent for signing through cryptographic algorithm. The public key on the other hand is known and stored, for example in CDSPD where it is used to decrypt the encrypted data with the corresponding private key. In CDSPD together with the public key is stored information, which uniquely identifies each configuration - RD-DED. Thanks to mathematical and cryptographic methods that are employed it is achieved high level of security in regards to data protection. The registration is a process of putting into operation of the RD after its unique serial numbers and serial numbers of DED are sent to CDSPD and the CDSPD returns confirmation of this operation. After the confirmation the pair RD-DED is formed and begins the process of generating a signature for each primary and/or secondary record.

In a preferred embodiment any change of the stored in the DED identification data for the RD after finalizing the personalization process with information for the RD connected to the DED and its owner is impossible. It is permitted only to be changed some of the data, such as addresses of the site, company or organization. Preferably each DED, respectively, its crypto card is possible to be used for a certain period of time, for example one year after its personalization. Then the crypto card has to be replaced for reasons related to security.

The example of embodiment given below of the method according to the invention is based on the cash register as RD and DED with crypto card. The example is intended to illustrate the implementation of the method and the operation of the system according to the invention and in no way limits the scope of the protection defined in the appended claims.

Upon event, such as sale of a product or service, the event data are entered in the RD and are stored in its memory, which initiates a procedure for creation of a primary record. Then RD sends those primary data to DED, which extracts the sensitive data from the primary data (such as document number, date and time of issuance, the total sum, etc.) and at the same time it extracts and accumulates the control data in its secured memory. The sensitive data is encrypted and as a result the DED returns to the RD individual unique electronic signature containing encrypted sensitive data extracted from primary data in two formats: as a 2D barcode and as a string. The encryption is performed using the private key. After receiving the unique electronic signature the RD stores the primary record together with its corresponding unique electronic signature in its memory. Simultaneously the data from the primary record and its unique digital signature can be visualized together by device for visualizing of data and then the same to be printed together by printing device in the form of primary document (for example cash register's receipt) with a 2D barcode.

A similar procedure is followed for generation of the secondary documents.

The registering device automatically or upon manual command creates a secondary record, which includes summarized data from the primary records created within a certain period of time. The data from the secondary records is sent to the DED, where predetermined sensitive data are extracted. They are encrypted and as a result a unique electronic signature is returned to the registering device, which is stored in its memory together with the data from the secondary record. The secondary record and its unique electronic signature is also visualized together by device for visualization of data, as well are printed together by printing device in the form of a secondary document with 2D barcode.

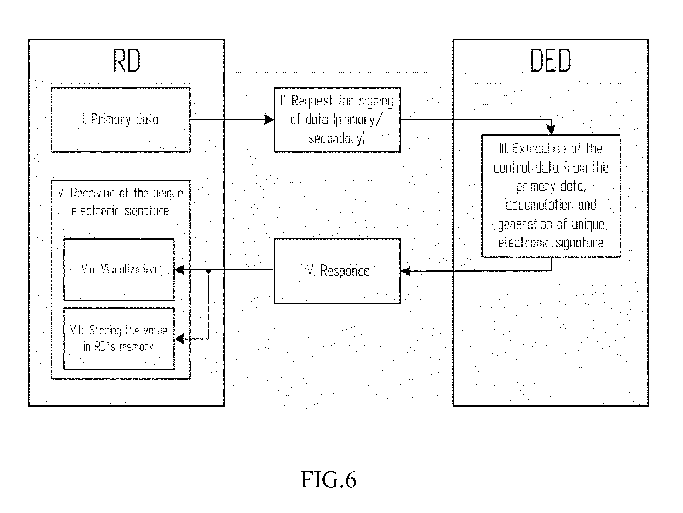

Figure 6 shows an algorithm for signing of a primary document. The algorithm includes the following:
I. Entering primary data
II. Request for signature from the RD to the DED whereupon primary data is sent to the DED
III. DED extracts control data from the primary data, accumulates them and stores them in its secure memory and simultaneously generates a unique electronic signature on the sensitive data. The RD is not required to verify the returned by the DED encrypted data (unique electronic signature)
IV. In case of success (the DED may be processing another task at the moment and to refuse the request for signature) DED returns the encrypted data (in the form of a unique digital signature) to RD
V. When the unique electronic signature is received by the RD:
   Va. It visualizes this unique electronic signature
   Vb Stores this unique electronic signature with the corresponding primary data record. These data (primary record and its corresponding unique electronic signature) are stored in memory of the RD in the form that allows to be extracted in the same sequence that they have been entered (created, stored) in the RD's memory. RD is making sure that the stored data for the signature to be identical with those received from the DED, i.e. RD does not change the form and order of the data received from DED - keeps them in the form in which they have been received and in the respective order.

The same algorithm is applied for signing the secondary documents.

In general, in the memory of the registering devices are stored:
- detailed information for primary record
- a unique electronic signature of the primary record
- detailed information for secondary record (if there is any)
- a unique electronic signature of the secondary record (if there is secondary record).

In general in the secured memory of the Data encryption device are stored:
- accumulated control data from primary records.

In predefined moment of the time the accumulated in the memory of the RD encrypted data (the unique digital signatures) for the primary and/or secondary records and other data from the primary records and/or secondary records are sent to CDSPD. Sending of the data is carried out and controlled by the DED. In a preferred embodiment with each sending of the data from the memory of the RD to CDSPD, the DED also sends the accumulated in its secure memory control data.

Sending of the data may be triggered by a manual command or upon reaching a predetermined value/s of one or more numerical parameters. Such parameters can be time, certain hour of the day or certain days in the week or month, depending on the specific needs of the organization. The parameters can be quantitative, such as a number of records or a specific amount accumulated in certain period of time since the last data transmission. The numerical parameters can be combined, such as sending is performed when it is reached the set value of at least one of the parameters. Preferably the value of the numerical parameters is set by CDSPD.

The difference between automatic and manual transfer of data from RD to CDSPD is only whether the command will be sent from RD to DED and then DED will return a command to RD to provide a channel for data transmission by communication device for transmission of data through transmission medium (this is manual command), or communication will be initiated by the DED and it will send the command to the RD to provide a channel for the transmission of data by communication device for data transmission through transmission medium. In both cases there will be communication between the DED and CDSPD according to unified protocol, which is optimized for speed and volume in an encrypted communication channel. Unauthorized entry into the system is not possible as the server has a list of all entry points (configuration: RD-DED-crypto card), which have valid access rights. In every communication the registering device identify itself to the CDSPD with both its own number and those of the DED. The identification is signed by the crypto card of the DED and cannot be counterfeit. Once identified, the entry point is allowed to send data. The next level of identification and verification before the data is to be stored - it is performed decryption with the public key corresponding to the data encryption device, which is sending the data. The decrypted data are stored in the CDSPD together with the encrypted for further processing and analysis. Thus even if the decrypted data is being counterfeit while stored in the central database, the corresponding encrypted data cannot be changed.

Data analysis may include comparison of secondary data submitted by registering device with those obtained by the accumulation of primary data in the DED's register. The purpose for encryption of the channel for data transmission is to prevent tampering of the transmitted data. The whole process from initiation to transmission is controlled by the DED.

Sending data from RD to CDSPD is in the form of packets, which are preferably formed from DED. Preferably the packets are sent encrypted and in an encrypted communication channel. One such packet may contain, for example:
Option 1: the serial numbers of the RD, serial number(s) of the DED, the primary data records and their unique electronic signatures, secondary data records (if there is any) together with their unique electronic signatures, accumulated control data from the memory of the DED;
Option 2: the serial numbers of the RD, serial number(s) of the DED, the primary data records and their unique electronic signatures;
Option 3: the serial number(s) of the DED, the primary data records and their unique electronic signatures, secondary data records (if there is any) together with their unique electronic signatures and other data

The data sent in packets from the DED, which has been extracted from memory of the RD and the control data from the DED, which has been accumulated in its secured memory are compared. Thus is checked if they match or not, i.e., has there been any malicious attempt for fraud by changing the data of the primary records.
The comparison can be done in several ways, for example:
(1) automatically by the CDSPD - comparison of the control data received from the DED and the data received for the primary and/or secondary records from the memory of the RD;
(2) manually by CDSPD - by command from operator;
(3) by reading the control data from the DED at the working site with the appropriate reader and reading the data stored in the RD, then comparing.

Preferably in case of unsuccessful attempt for sending the data packets from the RD to CDSPD the DED is counting each attempt and when a certain maximum is reached the DED suspends the signing of primary documents. This leads to blocking of the RD's printing operations of the primary documents, respectively the visualization and the whole recording device until successfully sending of the data to CDSPD.

The validity of the primary documents is ensured by the printing of 2D barcode. The barcode is a way of protection and means of detecting fake primary documents. In cases where the barcode is missing it is evident that the document is invalid. When the content of the issued document is modified the 2D barcode cannot be counterfeit, which is determined with scanning. The 2D barcode can be scanned and read by machine, then decrypted in order to verify certain document, which guarantees uniquely and determines if the documents is valid or not.

The method and system according to the invention allows the accumulated control data for the primary record to be kept in several places: once in the registering device, second in the data encryption device and third - in the central database. Thus, even assuming that the registering device and the central database might be compromised, those stored in the data encryption device cannot be compromised.

Various modifications of the method and system will be apparent to those skilled in the art that will remain within the field and scope of the present invention defined in appended claims. All the parts may further be replaced with other technically equivalent elements.

Reference signs for technical features are included in the claims for the sole purpose of increasing the intelligibility of the claims and accordingly, such reference signs do not have any limiting effect on the interpretation of each element identified by way of example by such reference signs.

### List of the reference numbers and abbreviations:

1 - RD - Registering device
2 - DID - Data input device
3 - DPD - Data processing device
4 - M - RD Memory
5 - CD - Communication device
6 - DED - Data encryption device
7 - DVD - Data visualization device
8 - PD - Printing device
9 - TM - Transmission medium
10 - CDSPD - central device for storage and processing of data
11 - CDB - Central database
12 - SM - RD's secure memory

## Claims

1. Method for collection and verification of data comprising the following steps:
- entering primary data into a registering device for creating at least one primary record, which is stored in a memory of the registering device,
- periodically sending of accumulated in the memory of the registering device data for primary records, created during a certain period of time, to a central database in a central device for storing and processing of data, wherein said sending of said data to said central device for storing and processing of data is carried out over communication channel through transmission medium by a communication device of the registering device,
- storing the transmitted data into said central device for storage and processing of data,
**characterized in that**
the registering device extracts, accumulates and stores, in an independent secure memory, control data for each primary record, and the control data are used to further inspection of the primary records, wherein said inspection is performed by comparing said control data with corresponding types of data accumulated and stored in another memory of the registering device and/or in the central database.

2. Method according to claim 1, **characterized in that** it comprises the following steps after entering of the primary data into the registering device:
- sending the entered primary data for each primary record to a data encryption device that is personalized to the registering device,
- encryption and personalization by the data encryption device of predefined sensitive data from the primary data in order to create a unique digital signature for each primary record, wherein the personalization of the data encryption device includes generation of a key pair comprising a first private key that is stored in the data encryption device and is used for encrypting the data, and a second public key that is stored in the central database and used for decrypting and verification of the encrypted data, wherein the generation of the key pair can be done by the data encryption device or by an external device,
- returning the encrypted data in the form of unique digital signature to the registering device and storing each primary record and corresponding encrypted data thereof in the memory of the registering device,
- periodically sending, by the data encryption device, of the encrypted data for the primary records and/or other data from primary records created during a certain period of time, accumulated in the memory of the registering device, to the central database in the central device for storing and processing of data, wherein the sending of the data is carried out over communication channel in transmission medium through the communication device of the registering device using an unified communication protocol,
- decrypting the encrypted data in the central device for storing and processing of data with the corresponding public key and storing in the central database of the decrypted data together with other data from primary records in encrypted and decrypted form,
wherein the extraction and accumulation of control data for each primary record is performed by the data encryption device, which stores the control data in its independent secure memory.

3. Method according to claim 2 **characterized in that** the recording device automatically or upon manual command creates a secondary record that includes summarized data from the primary records created during a certain period of time and sends the data from each secondary record to the data encryption device, which encrypts and personalizes predefined sensitive data from the secondary record for the creation of unique electronic signature for each secondary record, and the encrypted data for each secondary record are returned to the registering device in order to be stored each secondary record and its unique electronic signature in the memory of the registering device, and the unique electronic signature for each secondary record and/or other data from the secondary records and/or primary records are sent periodically to the central database.

4. Method according to claims 2 or 3 **characterized in that** the process of sending data from the registering device to the central data base is controlled by the data encryption device, wherein the data encryption device and the central device for storage and processing of data communicate between each other using unified communication protocol.

5. Method according to any of the claims 2, 3 or 4 **characterized in that** the data encryption device sends the control data in an encrypted form to the central database at each transmission of data from the memory of the registering device to the central database.

6. Method according to any of the claims 2 to 5 **characterized in that** the communication channel between the data encryption device and a central device for storage and processing of data is protected through encrypting.

7. Method according to claims 2 or 3 **characterized in that** the encrypted data for each primary and/or secondary record in the form of a unique digital signature, and the corresponding primary and/or secondary record are visualized simultaneously through a data visualization device connected to the registering device.

8. Method according to claims 2, 3 or 7, **characterized in that** each primary and/or secondary record and the corresponding unique electronic signature, which is in the form of a barcode or a character string, are printed together on a primary and/or a secondary document by printing device connected to the registering device.

9. Method according to any of the claims 1 to 6 **characterized in that** time for sending the data from the primary and/or secondary records accumulated in the memory of the registering device to the central database is determined by reaching of predetermined value/s of one or more numerical parameters.

10. Method according to claims 2 and 3 **characterized in that** upon receiving a manual command from the registering device or a command from the central database the data encryption device extracts from the memory of the registering device predefined data for one or more primary and/or secondary records and sends them in encrypted or unencrypted form to the central database together with the accumulated control data from its secure memory.

11. A registering device for entering and processing of data, comprising one or more data entering device (2), a data processing devices (3), non-volatile memory (4), the registering device being adapted to process and store entered in it primary data in the form of primary records in its memory (4), **characterized in that**
the registering device is adapted to extract, accumulate and store in an independent secure memory (12) control data for the entered and stored in the registering device primary data.

12. A registering device according to claim 11, **characterized in that** it additionally comprises a data encryption device (6), which is personalized to the registering device and the data encryption device has a unique number which corresponds to the unique number of the registering device, the data encryption device being adapted to encrypt data through cryptographic methods with a pair of keys - a first private key, which is stored in the data encryption device and is used to encrypt data, and a second public key, which is stored in a remote device for storage and processing of data and is used for decrypting and verification of the encrypted data, wherein said independent secure memory (12) is located in the data encryption device (6), which is adapted to extract, accumulate and store said control data in said independent secure memory (12).

13. A registering device according to claim 12, **characterized in that** the data encryption device (6) is adapted to generate a unique electronic signature for each primary record by encrypting predefined sensitive data for each primary record.

14. A registering device according to claims 12 and 13, **characterized in that** the data encryption device (6) is built-in in the registering device (1).

15. A registering device according to claim 12 and 13, **characterized in that** the data encryption device (6) is an external device for the registering device (1) able to connect to registering device through serial and/or parallel interface.

16. A registering device according to claims 12, 13, 14 or 15, **characterized in that** in addition to said independent secure memory (12) the data encryption device (6) comprises a processor and/or a module with computing, arithmetic, logic and cryptographic capabilities.

17. A registering device according to any of the claims 12 to 16, **characterized in that** the data encryption device (6) is adapted to generate encrypted data as a unique digital signature in the form of a character string and a digital image as an array of points.

18. A registering device according to any of the claims 12 to 17, **characterized in that** the data encryption device have a predetermined validity for a certain period of time, after which the data encryption device suspends its function for generation of electronic signatures.

19. A registering device according to any of the claims 11 to 18, **characterized in that** it further comprises or it is connected to one or more of the following devices: data visualization device (7), communication device for data transmission (5) in transmission medium to a remote device for storage and processing of data, printing device (8).

20. System for collection and verification of data comprising:
- at least one personalized registering device (1) for entering primary data, which comprises one or more data entering devices (2), a data processing device (3), a data storage device (4), and a communication device for data transmission (5) through transmission medium (9) to a central database (11),
and
- a central device for storage and processing of data (10) adapted to support a central database (11) which is connected through the transmission medium (9) with said at least one personalized registering device (1) and is adapted for receiving, verifying, processing and storing data from multiple registering devices (1) in the central database (11),
**characterized in that**
said at least one registering device (1) is adapted to extract, accumulate and store in an independent secure memory (12) of control data for entered and stored in the registering device data for further verification of corresponding types of data accumulated and stored in another memory of the registering device (1) and/or in a central device for storage and processing of data (10).

21. System according to claim 20 **characterized in that**:
- said at least one registering device (1) comprises a data encryption device (6), which is personalized to the registering device (1) and the data encryption device has an unique number that corresponds to an unique number of the registering device, wherein the data encryption device (6) is adapted to encrypt data by cryptographic methods with a pair of keys - a first private key, which is stored in the data encryption device and is used for encryption of data, and a second public key, which is stored in the central device for storage and processing of data (10) and it is used for decryption and verification of the encrypted data,
- and said central device for storage and processing of data (10) is adapted to store public keys of multiple personalized registering devices (1) and to decrypt the encrypted data from the corresponding personalized registering device (1) through its corresponding public key,
and wherein said independent secure memory (12) is located into the data encryption device (6), which is adapted to extract, accumulate and store in said independent secure memory (12) of said control data for entered and stored in the registering device data for further verification of the corresponding type of data accumulated and stored in the registering device (1) and/or in the central device for storage and processing of data (10).

22. System according to claim 21, **characterized in that** said registering device (1) is a device according to any of the claims 12 to 19.
